# FASCICULE DE BREVET EUROPEEN

(11) **EP 1 622 462 B1**
(45) Date de publication et mention de la délivrance du brevet: **17.06.2015**
(21) Numéro de dépôt: 04742605.1
(22) Date de dépôt: 29.04.2004
(51) Int. Cl.: A23C 19/068, A23C 19/05

(54) **PROCEDE DE FABRICATION DE FROMAGES A PATE FILEE**
VERFAHREN FÜR DIE HERSTELLUNG VON PASTA-FILATA-KÄSEN
METHOD FOR THE PRODUCTION OF STRETCHED CURD CHEESES

(30) Priorité: 05.05.2003 FR 0305442
(43) Date de publication de la demande: 08.02.2006
(73) Titulaire: Roquette Frères, 62136 Lestrem (FR)
(72) Inventeur: WATINE, Philippe, F-59650 Villeneuve d'Ascq (FR); BERCETCHE, Jean-Claude, F-64220 Ahaxe (FR)
(74) Mandataire: Cabinet Plasseraud
(86) Numéro de dépôt international: PCT/FR2004/001039
(87) Numéro de publication internationale: WO 2004/098302

(56) Documents cités:
- EP-A- 0 312 359
- EP-A- 0 347 308
- EP-A- 1 055 373
- FR-A- 2 591 433
- US-A- 5 902 625
- US-A- 6 113 953
- JANA A H ET AL: "PROCESS STANDARDIZATION FOR MANUFACTURE OF MOZZARELLA CHEESE FROM HOMOGENIZED BUFFALO MILK" INDIAN JOURNAL OF DAIRY SCIENCE, XX, XX, vol. 45, 1 mai 1992 (1992-05-01), pages 256-260, XP000522468
- PERRY D B ET AL: "Manufacture of Low Fat Mozzarella Cheese Using Exopolysaccharide-Producing Starter Cultures", JOURNAL OF DAIRY SCIENCE, AMERICAN DAIRY SCIENCE ASSOCIATION, US, vol. 81, no. 2, 1 February 1998 (1998-02-01), pages 563-566, XP027048101, ISSN: 0022-0302 [retrieved on 1998-02-01]

## Description

La présente invention concerne un nouveau procédé de préparation de fromages à pâte filée.

Plus précisément, l'invention a pour objet un nouveau procédé de préparation de fromages à pâte filée selon lequel on utilise un lait pasteurisé, acidifié avant ou après pasteurisation de façon contrôlée au moyen d'un agent acidogène.

Dans le cadre de la présente invention, on entend par fromages à pâtes filées conformément à la classification donnée dans l'ouvrage « Le Fromage », par André ECK, Technique et Documentation (Lavoisier, Paris, 1984), page 245, les fromages à caillé plastique dont ledit caillé, une fois le sérum égoutté, est immergé soit dans de l'eau chaude, soit dans du sérum chaud et travaillé, étiré, avant d'être moulé lorsqu'il est à l'état plastique. Les principaux fromages entrant dans cette catégorie sont notamment les fromages de type : Mozzarella, Provolone, Sarde, Metton, et fromages à pizza.

De manière traditionnelle, les fromages à pâte filée sont fabriqués à partir de lait entier ou partiellement écrémé, qui est emprésuré et acidifié. L'emprésurage consiste à additionner le lait maturé d'enzymes coagulantes.

Le caillé formé est découpé en cossettes (décaillage) jusqu'à l'obtention de grains ayant une taille désirée et égoutté, puis chauffé de manière à accentuer entre autres la sortie du sérum des grains de caillé. Lorsque l'acidification désirée est obtenue, le caillé est fortement malaxé, étiré, modelé, lissé, soit manuellement, soit à la machine dans l'eau ou le sérum chaud, puis refroidi rapidement, séché et salé.

Le lait cru de départ peut subir des opérations de traitement thermique et de maturation par addition de ferments lactiques qui conduisent à une acidification du lait jusqu'à une valeur de pH correspondant aux exigences requises pour l'étape ultérieure d'emprésurage, généralement comprise entre 6,5 et 6 environ.

Il est connu que l'élévation de la température de pasteurisation de laits de fromagerie peut permettre une augmentation du rendement fromager et qu'il est intéressant pour des raisons d'hygiène, de pouvoir traiter les laits à des températures supérieures à 72°C. Il est connu également que de tels traitements thermiques réduisent l'aptitude du lait à se transformer en fromage. La Demanderesse a alors proposé dans son brevet EP 347.308 B1 une solution permettant de pallier toutes les difficultés inhérentes à l'utilisation de laits traités à des températures élevées. Cette solution consiste en l'addition à ces laits d'un agent acidogène choisi parmi les gluconolactones ou les glucoheptonolactones, permettant de restaurer les aptitudes fromagères sans faire appel à de nouvelles technologies. Ainsi, il est devenu possible de fabriquer des fromages emprésurés tels que notamment les fromages de type pâte molle à partir de laits chauffés à plus de 78°C.

Perry et al, J. Dairy Sci, 1998, 81:563-566, XP027048101, décrit un procédé de fabrication de fromages à pâte filée avec un lait pasteurisé à 80°C et inoculé avec des bactéries lactiques.

Cependant, la Demanderesse a constaté que ce procédé de surchauffage ne permettait pas la fabrication de fromages à pâtes filées selon la technologie classique. En effet, et comme il sera démontré plus loin, le traitement des laits à certaines températures est incompatible avec des propriétés satisfaisantes de filage du caillé. L'aptitude au filage est le critère déterminant de ce type de fromage. Le filage est une sorte de fibration par étirement, et il est important de favoriser le glissement des fibres sur elles-mêmes afin d'obtenir un filage maximal. Or le filage n'est pas possible, ou alors médiocre lorsqu'on utilise un lait pasteurisé à haute température et acidifié au moyen de gluconodeltalactone (ci-après définie par l'abréviation « GDL »).

Il existait donc un besoin non satisfait pour un procédé de fabrication de pâtes filées à partir de laits pasteurisés à haute température et acidifiés au moyen d'un agent acidogène.

Cherchant à solutionner ce problème, la Demanderesse a constaté que l'augmentation progressive du couple temps/température de traitement du lait diminuait de façon conséquente l'aptitude à filer. Les pâtes obtenues devenaient de moins en moins cohésives, se dispersant aux températures les plus élevées, et donnant une texture de pâte de moins en moins longue. La température et le temps de pasteurisation du lait sont donc des paramètres critiques dans la fabrication de pâtes filées.

Par ailleurs, l'aptitude au filage de caillés issus de laits chauffés est améliorée par des taux croissants d'agent acidogène. Cependant, les pâtes filées obtenues présentent toujours des aptitudes technologiques médiocres.

D'autre part, il a toujours été nécessaire de corriger les laits traités thermiquement en ajoutant après traitement des sels de calcium et en particulier du chlorure de calcium pour diminuer le temps de prise et augmenter la vitesse de raffermissement du coagulum ainsi que pour améliorer les propriétés rhéologiques du caillé. On peut en effet constater que tous les fromages décrits dans le brevet EP 347.308 B1 précité sont fabriqués à l'aide d'un lait traité à haute température puis additionné de chlorure de calcium de manière à corriger les aptitudes technologiques du caillé et à obtenir le même temps de prise qu'avec du lait cru. Or dans le cas des pâtes filées préparées à partir de lait traité à haute température, la Demanderesse a constaté au cours de nombreux essais que l'addition de chlorure de calcium au lait allait à l'encontre des aptitudes au filage.

La demanderesse a eu le mérite de constater que, de façon surprenante, en conjuguant l'effet d'un couple temps/température de pasteurisation sélectionné, d'une dose optimisée d'agent acidogène, et d'un appauvrissement du lait en sels de calcium exogènes, l'on pouvait prétendre à la fabrication de pâtes filées de qualité comparable et même supérieure à des pâtes filées obtenues selon les techniques traditionnelles.

Sans vouloir être liée à une quelconque théorie, il semble que l'agent acidogène joue un rôle prépondérant au niveau des équilibres calciques au cours de la coagulation du lait. Ainsi, la présence d'une certaine dose d'agent acidogène jouerait le rôle de réserve de calcium, régulant ainsi la minéralisation de la caillebotte et permettant un filage convenable voire amélioré lorsque les conditions fromagères ou les conditions de traitements thermiques du lait sont défavorables. Le chlorure de calcium ne peut constituer en lui-même une réserve puisque son seul ajout vient augmenter immédiatement la part de calcium ionisé et brutalement modifier l'équilibre micellaire.

L'invention a donc pour objet un procédé de fabrication de fromages à pâte filée à partir de lait pasteurisé comprenant les étapes successives de préparation du lait, emprésurage, coagulation, décaillage, égouttage, filage, caractérisé en ce qu'au cours de la phase de préparation du lait, celui-ci présentant une faible teneur en sels de calcium exogènes, est traité thermiquement à une température comprise entre 80 et 85°C, et est additionné d'une quantité efficace d'agent acidogène avant ou après ledit traitement thermique.

Par sels de calcium exogènes on entend au sens de la présente invention les sels de calcium non micellaire, apportés volontairement au lait pour correction de ses aptitudes technologiques, et en particulier le chlorure de calcium. Par faible teneur, on entend le fait que le lait mis en oeuvre dans le procédé selon l'invention contient peu ou pas de sels de calcium ajoutés. La composition des laits étant très variable en fonction de leur origine, une faible teneur en sels de calcium exogènes permettant la mise en oeuvre de la présente invention se traduit par un lait comprenant moins de 0,4 g de sels de calcium par litre de lait, de préférence moins de 0,2 g/l, et mieux encore moins de 0,1g/l. Selon une variante préférée du procédé selon l'invention, le lait est exempt de sels de calcium exogènes.

Le lait mis en oeuvre selon l'invention est un lait non reconstitué de toute origine, cru ou ayant subi un traitement thermique préalable à une température inférieure à 78°C, éventuellement une standardisation en matière grasse, et/ou un ajustement en matière protéique par ultrafiltration. Il est également possible d'utiliser un lait reconstitué (mélange de lait en poudre et d'eau) ou recombiné (mélange de lait en poudre, d'eau et de matière grasse laitière).

Par agent acidogène, on comprend toute substance capable de générer progressivement un acide dans le lait soit par solubilisation, soit par libération. Parmi les substances capables de générer progressivement un acide dans le lait par solubilisation figurent notamment les lactones telles que les gluconodeltalactones et les glucoheptonolactones et similaires et/ou leurs mélanges qui, en milieu aqueux, s'hydrolysent progressivement en l'acide correspondant.

Parmi les substances capables de générer progressivement un acide dans le lait par libération figurent par exemple les acides fixés sur support à solubilisation ou délitement retardé.

L'apport d'agent acidogène peut être effectué indifféremment sous la forme de poudre ou sous la forme d'une solution.

Dans le cas où il est préféré d'apporter cet agent acidogène sous la forme d'une solution, à savoir une solution dans de l'eau ou du lait, celle-ci est avantageusement préparée au moment de l'emploi afin de préserver le caractère acidogène de l'agent tel que défini plus haut.

A titre indicatif, l'agent acidogène pourra être introduit dans le lait cru, avant ou après un premier traitement éventuel de pasteurisation, avant ou après le traitement thermique au sens de l'invention, c'est à dire compris entre 80 et 85°C.

Il semble toutefois qu'il soit préférable d'introduire l'agent acidogène dans le lait après le traitement thermique selon l'invention.

De façon préférentielle, le traitement thermique du lait est effectué à une température comprise entre 80 et 82°C. De très bons résultats ont été obtenus lorsque le traitement est effectué à 80°C pendant 20 à 60 secondes, et de préférence pendant 20 secondes. Le filage est également très bon après traitement à 82°C, toutefois quelques grains de protéines sériques apparaissent dans le caillé. Au-delà de 82°C, le filage n'est plus possible.

En ce qui concerne l'agent acidogène, on préfère utiliser la glucono-delta-lactone (GDL). Avantageusement, celle-ci est additionnée à raison de 0,5 à 1,5 g/l, de préférence de 0,7 à 1 g/l de lait, et encore plus préférentiellement à raison de 1g/litre de lait. Une telle dose de GDL permet d'obtenir un pH au filage d'au minimum 5.4 et de préférence 5.1, pH à partir duquel la Demanderesse a démontré les meilleures chances de filage.

Toutes les étapes postérieures à la phase de préparation du lait sont propres à la technologie des pâtes filées et seront choisies selon les connaissances générales de l'homme du métier.

Le procédé conforme à l'invention présente de nombreux avantages par rapport à l'art antérieur, outre celui de permettre le filage de caillés obtenus par acidification à la GDL d'un lait pasteurisé. Il augmente de manière conséquente les rendements de fabrication en permettant un gain de matières azotées récupérées supérieur à celui des procédés classiques, ce qui est un avantage économique évident, et il permet par la réduction des teneurs en calcium ionisé de lutter contre la prolifération des bactériophages responsables de l'attaque et de la lyse des ferments lactiques et viennent perturber l'acidification du lait, la formation du caillé et sa qualité organoleptique.

En outre, il est fort possible que les doses de ferments et de coagulants à ajouter puissent être diminuées, ce qui est un autre avantage économique.

L'invention sera mieux comprise à la lecture des exemples qui suivent et qui comportent la description de modes de réalisation avantageux. Tous ces exemples ont été réalisés par l'Ecole Nationale d'Industrie Laitière de MAMIROLLE - BESANCON (France) en liaison avec la société Chr HANSEN France (ARPAJON - France).

### Exemple 1

Un lait cru âgé de 12/24h au ramassage, stocké 24h en cru à 4°C, standardisé en matières grasses à 36g/l est préparé selon les caractéristiques suivantes :
- Pasteurisation: 75°C/30s et 60s, 80°C/60s, 85°C/60s et 90°C/60s
- Complément en CaCl2 : 90ml/hl d'une solution à 470g/l de CaCl2, soit une teneur de 0,42 g/l de lait.
- Ajout de GDL : 0 pour le témoin, 0,7 g/l pour les essais

Ce lait est chauffé à 38°C (température de maturation), additionné de ferments (STM5 - 2%) et soumis à un temps de maturation de 30 minutes. Le pH d'emprésurage est de 6.35. L'emprésurage est alors réalisé, à 38°C, au moyen de CHYMAX PLUS à une dose de 16.3 ml/hl. Les ferments et le coagulant ainsi que la gluconodeltalactone ont été fournis par la société Chr. HANSEN France (ARPAJON - France)

Le temps de prise est de 10 minutes, le temps de durcissement de 30 minutes. Le gel obtenu est découpé, brassé, acidifié sous sérum en bac fermé pendant 2h à 2h30 jusqu'à obtenir un pH de filage minimum de 5.4. le filage est réalisé à la main, dans l'eau à 85°C.

Les résultats obtenus sont repris dans le tableau ci-après :

| | **TEMOIN 1** | **TEMOIN 2** | **ESSAI 1** | **ESSAI 3** | **ESSAI 4** |
|---|---|---|---|---|---|
| TRAITEMENT THERMIQUE | 73°C 30sec | 73°C 60sec | 80°C 60sec | 85°C 60sec | 90°C 60sec |
| DOSE DE CaCl2 (ml/hl) | 20 | 90 | 90 | 90 | 90 |
| DOSE DE GDL (g/l) | 0 | 0,7 | 0,7 | 0,7 | 0,7 |
| FILAGE (note de 1 à 10) | 10 | 8 | 6 | 1 | 0 |
| FILAGE (longueur de fil en cm) | >100 | >100 | 30 | 0 | 0 |

### Conclusion des essais et observations :

L'augmentation progressive des couples temps/température de traitement thermique du lait provoque un comportement différent au niveau de la coagulation et de l'égouttage des laits, mais qui est récupéré par les corrections en CaCl2 et GDL. Cependant, malgré les corrections apportées, tout traitement supérieur à 80°C/60s rend très difficile le filage manuel. La pâte n'est pas cohésive, voire se disperse aux températures les plus élevées, elle sèche, le fil est plus court au fur et à mesure que le couple augmente. Le couple limite est celui à 80°C/60s, où le filage a tout de même été possible, même s'il est relativement faible. Le choix d'une température de pasteurisation adéquate ne suffit pas à lui seul à conférer des aptitudes au filage satisfaisantes.

### Exemple 2

Le même lait qu'à l'exemple 1 est préparé selon les caractéristiques suivantes :
- Pasteurisation : 72°C/20sec pour le témoin, et 80°C/20sec, 82°C/20sec
- Complément en CaCl2 : 20ml/hl ou 90ml/h d'une solution à 470g/l de CaCl2, soit une teneur de 0,09 g/l, ou de 0,42 g/l de lait.
- Complément en GDL : néant ou 0,3 à 1g/l

Ce lait est chauffé à 36°C (température de maturation), additionné de ferments (STM5 - 8g/hl) et observe un temps de maturation de 60 minutes. Le pH d'emprésurage est de 6,55-6,6 pour le témoin et 6,45-6,50 pour les essais. L'emprésurage est alors réalisé, à 36°C, au moyen de CHYMAX PLUS à une dose de 17 ml/hl pour le témoin, 13 ml/hl pour les essais.

Le temps de prise est de 20 minutes, le temps de durcissement de 50 minutes. Le gel obtenu est découpé, chauffé à 40°C pendant 4 minutes, brassé, acidifié sous sérum en bac fermé pendant 2h à 2h30 jusqu'à obtenir un pH de filage minimum de 5,4. le filage est réalisé à la main, dans l'eau à 85°C ou à la machine lorsque ceci est possible.

Les résultats sont repris dans le tableau ci-après :

| | **TEMOIN 1** | **ESSAI 5** | **ESSAI 6** | **ESSAI 7** | **ESSAI 8** | **ESSAI 9** | **ESSAI 10** |
|---|---|---|---|---|---|---|---|
| TRAITEMENT THERMIQUE | 72°C 20sec | 80°C 20sec | 80°C 20sec | 80°C 20sec | 82°C 20sec | 82°C 20sec | 82°C 20sec |
| DOSE DE CaCl2 (ml/hl) | 20 | 90 | 90 | 90 | 90 | 90 | 90 |
| DOSE DE GDL (g/l) | 0 | 0,3 | 0,5 | 0,7 | 0,5 | 0,7 | 1 |
| FILAGE (note de 1 à 10) | 10 machine | 2 manuel | 2 manuel | 8 machine | 2 manuel | 5 machine | 7 machine |
| FILAGE (longueur de fil en cm) | >100 | 8 | 52 | 57 | 62,5 | 31,3 | 50 |

### Conclusions et observations des essais :

**Essais 5 et 6 :** on observe un fil difficile à obtenir, le passage en machine n'est pas possible ;
**Essai 7 :** le filage est inférieur au témoin et la pâte obtenue est trop ferme.
   Les températures de traitement thermique sont correctes, mais les corrections en GDL inférieures à 0,7 g/l ne permettent pas un filage satisfaisant.
**Essai 8 :** seul un filage manuel est possible, mais la pâte reste très dure.
**Essai 9 :** on observe une aptitude au filage moyenne ce qui permet un filage en machine, mais la pâte reste dure, cassante, pas assez lisse.
**Essai 10 :** cet essai est le meilleur de la série, la texturation est possible en machine, mais la pâte est toujours plus dure que le témoin, et présente un lissage moyen, avec présence de grains dans les fibres réalisées.

Le choix d'une dose adéquate de GDL ne suffit pas à lui seul ou combiné avec une pasteurisation sélectionnée à améliorer les propriétés de filage de la pâte.

### Exemple 3

Le même lait qu'à l'exemple 1 est préparé selon les caractéristiques suivantes :
- Pasteurisation : 72°C/20sec pour le témoin, et 80°C/20sec, 82°C/20sec, 85°C/20sec
- Complément en CaCl2 : 20ml/hl ou 90ml/h ou néant
- Complément en GDL : néant ou 1g/l

Ce lait est chauffé à 41°C (température de maturation), additionné de ferments (STM5 - 8g/hl) et observe un temps de maturation de 60 minutes. Le pH d'emprésurage est de 6,55-6,6 pour le témoin et 6,45-6,50 pour les essais. L'emprésurage est alors réalisé, à 36°C, au moyen de CHYMAX PLUS à une dose de 25 ml/hl.

Le temps de prise est de 8-10 minutes, le temps de durcissement de 24-30 minutes. Le gel obtenu est découpé, chauffé à 40°C pendant 4 minutes, brassé, acidifié sous sérum en bac fermé pendant 2h à 2h30 jusqu'à obtenir un pH de filage minimum de 5,4. le filage est réalisé à la main, dans l'eau à 85°C.

Les résultats sont repris dans le tableau ci-après :

| | **TEMOIN 1** | **ESSAI 11** | **ESSAI 12** | **ESSAI 13** | **ESSAI 14** |
|---|---|---|---|---|---|
| TRAITEMENT THERMIQUE | 72°C 20sec | 85°C 20sec | 85°C 20sec | 82°C 20sec | 80°C 20sec |
| DOSE DE CaCl2 (ml/hl) | 20 | 90 | 0 | 0 | 0 |
| DOSE DE GDL (g/l) | 0 | 0 | 1 | 1 | 1 |
| FILAGE (note de 1 à 10) | 9 | 3 | 2 | 9 | 10 |

La limite d'aptitude au filage se situe à un traitement thermique de 82°C/20sec et 1g/l de GDL.

A ce barème, le filage est bon mais la pâte présente quelques grains.

Les essais 11 et 12 donnent une pâte qui ne pourrait passer en machine.

Les meilleurs résultats sont obtenus pour l'essai 14, sans chlorure de calcium, avec un traitement à 80°C/20sec et 1g/l de GDL. Cet essai donne de meilleurs résultats que le témoin. Le choix d'un traitement thermique spécifique, associé à une dose optimale de GDL et d'une absence de correction en calcium permet non seulement d'améliorer les propriétés de filage de la pâte, mais aussi de lui conférer une supériorité par rapport au témoin qui correspond à la technologie classique de l'art antérieur.

## Revendications

1. Procédé de fabrication de fromages à pâte filée à partir de lait pasteurisé comprenant les étapes successives de préparation du lait, emprésurage, coagulation, décaillage, égouttage, filage, **caractérisé en ce qu'**au cours de la phase de préparation du lait, celui-ci présentant une teneur en sels de calcium exogènes inférieure à 0,4 g/l, est traité thermiquement à une température comprise entre 80 et 85°C, et est additionné d'une quantité efficace d'agent acidogène avant ou après ledit traitement thermique, **caractérisé en ce que** l'agent acidogène est choisi parmi les substances capable de générer progressivement de l'acide dans le lait par solubilisation et les acides fixés sur support à solubilisation ou délitement retardé.

2. Procédé selon l'une ou l'autre des revendications 1 et 2, **caractérisé en ce que** le traitement thermique est effectué à une température comprise entre 80 et 82°C.

3. Procédé selon la revendication 1, **caractérisé en ce que** la durée du traitement thermique est comprise entre 20 et 60 secondes.

4. Procédé selon l'une quelconque des revendications 1 à 3, **caractérisé en ce que** l'agent acidogène est additionné à raison de 0,5 à 1,5 g/l, de préférence de 0,7 à 1 g/l de lait.

5. Procédé selon l'une quelconque des revendications 1 à 4, **caractérisé en ce que** l'agent acidogène est choisi parmi les gluconolactones et les glucoheptonolactones.

6. Procédé selon l'une quelconque des revendications 1 à 5, **caractérisé en ce que** l'agent acidogène est la gluconodeltalactone.

7. Procédé selon l'une quelconque des revendications 1 à 6, **caractérisé en ce que** le lait présente une teneur en sels de calcium exogènes inférieure à 0,2 g/l.

## Patentansprüche

1. Verfahren zur Herstellung von Pasta-Filata-Käsen aus pasteurisierter Milch, umfassend die aufeinanderfolgenden Schritte der Vorbereitung von Milch, Labzugabe, Koagulation, Käsebruchschneiden, Entwässern, Spinnen, **dadurch gekennzeichnet, dass** während der Vorbereitungsphase der Milch, wobei diese einen Gehalt zugegebener Calciumsalze unter 0,4 g/l aufweist, thermisch behandelt wird bei einer Temperatur, umfassend zwischen 80 und 85 °C, und eine effektive Menge eines acidogenen Mittels vor oder nach der thermischen Behandlung zugesetzt wird, **dadurch gekennzeichnet, dass** das acidogene Mittel ausgewählt wird aus den Substanzen, die in der Lage sind nach und nach Säure in der Milch durch Solubilisation zu erzeugen, und durch Säuren, die auf Trägern zur Solubilisation oder zum verzögerten Zerfall gebunden sind.

2. Verfahren nach Anspruch 1, **dadurch gekennzeichnet, dass** die thermische Behandlung bei einer Temperatur, die zwischen 80 und 82 °C umfasst, durchgeführt wird.

3. Verfahren nach Anspruch 1, **dadurch gekennzeichnet, dass** die Dauer der thermischen Behandlung zwischen 20 und 60 Sekunden umfasst.

4. Verfahren nach einem der Ansprüche 1 bis 3, **dadurch gekennzeichnet, dass** das acidogene Mittel für 0,5 bis 1,5 g/l, vorzugsweise 0,7 bis 1 g/l Milch zugegeben wird.

5. Verfahren nach einem der Ansprüche 1 bis 4, **dadurch gekennzeichnet, dass** das acidogene Mittel ausgewählt wird aus den Gluconolactonen und den Glucoheptonolactonen.

6. Verfahren nach einem der Ansprüche 1 bis 5, **dadurch gekennzeichnet, dass** das acidogene Mittel das Gluconodeltalacton ist.

7. Verfahren nach einem der Ansprüche 1 bis 6, **dadurch gekennzeichnet, dass** die Milch einen Gehalt zugegebener Calciumsalze unter 0,2 g/l aufweist.

## Claims

1. A method for the production of spun-curd cheeses from pasteurized milk, comprising the successive steps of preparation of the milk, renneting, coagulation, curd-cutting, draining, spinning, wherein during the phase consisting of preparation of the milk, which has a low exogenous calcium content of less than 0.4 g/l, said milk is thermally treated at a temperature of between 80 and 85°C, and an effective amount of an acidogenic agent is added before or after said thermal treatment, wherein said acidogenic agent is chosen among the substances capable of gradually generating an acid in milk by solubilization and acids attached to a delayed-solubilization or delayed-disintegration support.

2. The method as claimed in claims 1 and 2, wherein the thermal treatment is carried out at a temperature of between 80 and 82°C.

3. The method as claimed in claim 1, wherein the thermal treatment period is between 20 and 60 seconds.

4. The method as claimed in any one of claims 1 to 3, wherein the acidogenic agent is added at a rate of 0.5 to 1.5 g/l, preferably 0.7 to 1 g/l of milk.

5. The method as claimed in claims 1 to 4, wherein the acidogenic agent is chosen from gluconolactones and glucoheptonolactones.

6. The method as claimed in any one of claims 1 to 5, wherein the acidogenic acid is glunono-delta-lactone.

7. The method as claimed in any one of claims 1 to 6, wherein the milk has an exogenous calcium salt content of less than 0.2 g/l.
